# EUROPÄISCHE PATENTSCHRIFT

(11) **EP 0 440 017 B1**
(45) Veröffentlichungstag und Bekanntmachung des Hinweises auf die Patenterteilung: **05.04.1995**
(21) Anmeldenummer: 91100085.9
(22) Anmeldetag: 02.01.1991
(51) Int. Cl.: G11B 19/02, G08B 13/18, H04N 7/18, G11B 27/10

(54) **Bild- und/oder Tonsignalempfangs- und -aufzeichnungsanordnung**
Video and/or audio receiving and recording device
Arrangement de réception et d'enregistrement d'image et/ou de son

(30) Priorität: 30.01.1990 DE 4002646
(43) Veröffentlichungstag der Anmeldung: 07.08.1991
(73) Patentinhaber: Wilhelms, Rolf, Dr., D-81667 München (DE)
(72) Erfinder: Wilhelms, Rolf, Dr., D-81667 München (DE)
(74) Vertreter: WILHELMS, KILIAN & PARTNER Patentanwälte

(56) Entgegenhaltungen:
- EP-A- 0 262 978
- DE-A- 2 219 330
- DE-A- 2 219 330
- DE-A-13 015 737
- DE-A-13 015 737
- DE-A-13 333 078
- DE-A-13 333 078
- US-A- 4 430 676
- US-A- 4 430 676

## Beschreibung

Die Erfindung betrifft eine Empfangs- und -aufzeichnungsanordnung für Rundfunk- und/oder Fernsehsendungen aus einem Empfänger und einem Aufzeichnungsgerät.

Derartige Anordnungen sind beispielsweise als Videorekorder mit integrierter Wiedergabevorrichtung (Monitor) oder separatem Fernsehgerät bekannt. Auf einem anderen technischen Gebiet sind sie als Radiokassettenrekorder mit integriertem Radioempfangsteil bekannt.

Aus der DE-OS 31 26 430 ist ein Aufnahmegerät beispielsweise ein Diktiergerät mit einer automatischen Starteinrichtung bekannt, die das Diktiergerät und insbesondere den Antrieb für den Aufzeichnungsträger dann anschaltet, wenn die Amplitude des aufzunehmenden Signals über einer Ansprechschwelle liegt. Durch diese Ausbildung wird ein unnötiger Bandverbrauch vermieden, da das Gerät nur dann arbeitet, wenn ein Nutzsignal vorliegt.

Um bei einem derartigen Aufnahmegerät zu vermeiden, daß der Anfangsteil nach dem Start der Aufnahme verzerrt aufgezeichnet wird, da das Aufnahmegerät die notwendige Laufgeschwindigkeit des Aufzeichnungsträgers noch nicht erreicht hat, ist ein Verzögerungsteil vorgesehen, der die Aufzeichnung des Signals auf den Aufzeichnungsträger um eine Zeitspanne verzögert, die der Zeit entspricht, die der Aufzeichnungsträger braucht, um seine Sollgeschwindigkeit zu erreichen.

Aus der Zeitschrift Funkschau 1960, Heft 22, Seiten 559 bis 561 ist weiterhin zu entnehmen, bei einem Magnetbandgerät mit Startautomatik, das erst dann anzulaufen beginnt, wenn ein aufzunehmendes Signal anliegt, das Aufzeichnungssignal um einige Sekunden, beispielsweise über ein endloses Hilfsband zu verzögern, um möglichst wenig vom Signalanfang zu verlieren.

Aus der US 4 282 602 ist bekannt, bei Live-Rundfunksendungen das Originalsignal vor dem Aussenden um eine gewisse Zeitspanne zu verzögern, so daß die Möglichkeit besteht, die Sendung zu überwachen und ggf. unerwünschte Passagen zu unterdrücken, ohne daß sich das beim Empfänger bemerkbar macht.

Schließlich sind Radiogeräte bzw. Fernsehgeräte bekannt, bei denen während der Übertragung durch den Hörer/Seher einige Sekunden der vorher empfangenen Sendung rückgespielt (replay) werden können. Bei Beendigung dieses Replays wird die Originalwiedergabe der Sendung zu diesem Zeitpunkt wieder aufgenommen, wobei der während des Replays weitergelaufene Sendungsteil verloren geht. Eine erfindungsgemäße Aufzeichnung ist hierbei weder gewollt noch möglich.

In der DE-A-2 219 330 wird eine Anordnung zum Beobachten gefährdeter Orte beschrieben, die aus einer Kamera und einem Videorekorder besteht. Der Videorekorder besitzt einen oder zwei endlos arbeitende Speicher, wobei die Kamera im Kassenraum und der Videorekorder in einem anderen Raum untergebracht werden. Das erfindungswesentliche Stop-Signal, das beispielsweise bei einem Überfall durch einen Bankangestellten gegeben werden soll, wird so verzögert, daß ein Teil der vorher aufgenommenen Signale und ein Teil der nachfolgenden Signale sich in dem Speicher befinden.

Die E-A1-3 333 078 betrifft ebenfalls eine Video-Überwachungsvorrichtung, bei der erfindungswesentlich ist, daß die Kamera mit einem Bildfrequenz/Tonfrequenzumsetzer und der wiederum mit einem Tonfrequenz-Bandaufzeichnungsgerät verbunden ist. Der auch hier vorhandene Speicher für Signale wird bei Bedarf gestoppt. Der Vorteil dieser Überwachungseinrichtung wird darin gesehen, daß die Verbindung über weitere Wege zwischen Videokamera und Aufzeichnungsgerät durch die Verwendungsmöglichkeit von Leitungen für Tonfrequenzsignale anstelle von Leitungen für Bildfrequenzsignale erleichtert wird.

DE-A1-3 015 737 betrifft eine Aufnahmeeinrichtung für Überwachungszwecke (wie sie beispielsweise in einem Automobil zur Diebstahlsicherung oder zur Dokumentation von Unfällen verwendet werden soll), wobei diese Vorrichtung neben Zeitraffer auch einen fortlaufend wieder löschbaren Speicher aufweist.

Die US-A4 430 676 beschreibt eine Vorrichtung zum selektiven Aufnehmen von Signalen, wobei beispielsweise Musik unter Auslassung zwischenliegender Werbung aufgenommen wird.

In der EP-A2-0 262 978 wird ein automatischer Telefonbeantworter beschrieben.

In der US-PS 3 812 530 wird eine Anordnung beschrieben, die zur verzögerten Tonbandaufzeichnung von Redebeiträgen auf Konferenzen oder von Telefongesprächen dienen soll; diese Vorrichtung besteht aus einem Mikrofon zur Aufnahme des Tons, der auf ein Endlosband definierter Länge übertragen und von diesem, bei Bedarf, zeitlich verzögert in ein Tonbandgerät eingespeist und von diesem aufgezeichnet wird.

Ton- und/oder Bildaufzeichnungen eines laufenden Programms werden gewöhnlich dadurch ausgeführt, daß das Empfangsgerät angeschaltet, der interessierende Sendekanal oder die interessierende Frequenz aufgesucht und die Aufzeichnung in dem Moment begonnen wird, in dem vom Betrachter oder vom Zuhörer der entsprechende Befehl an das zur Aufzeichnung vorbereitete Aufzeichnungsgerät gegeben wird. Weiterhin ist es bereits bekannt, die Aufzeichnung vorzuprogrammieren, d. h. aufzuzeichnen, ohne daß der Zuhörer oder Zuschauer die Sendung unmittelbar miterlebt.

Bei derartigen Aufzeichnungsgeräten wird es als nachteilig empfunden, daß dann, wenn der Zuhörer oder Zuschauer eine Bild- und/oder Tonsendung empfängt und während der Sendung, beispielsweise während eines Musikstückes oder während eines Programmteils wie beispielsweise einer Nachrichten- oder Informationssendung, entscheidet, daß er diese Sendung aufnehmen will, eine Aufzeichnung nur von dem Zeitpunkt dieser Entscheidung an, nicht jedoch rückwirkend und damit vollständig möglich ist.

Es ist andererseits aus technischen und wirtschaftlichen Gründen nicht möglich, vorsorglich alle Sendungen aufzuzeichnen, um nachher einen kleinen Teil aufzubewahren und den Rest zu löschen. Das würde einen übergroßen Verbrauch von Aufzeichnungsmaterial usw. erfordern.

Die erfindungsgemäße Aufgabe besteht darin, eine Empfangsund aufzeichnungsanordnung für Rundfunk- und/oder Fernsehsendungen aus einem Empfänger und einem Aufzeichnungsgerät zu schaffen, mit der es möglich ist, bei einer momentanen Entscheidung des Benutzers aus einer bereits laufenden Sendung Teile aufzuzeichnen, die vor dieser Entscheidung bereits gesendet wurden.

Diese Aufgabe wird gemäß der Erfindung durch die Ausbildung gelöst, die im Patentanspruch 1 angegeben ist.

Bei der erfindungsgemäßen Anordnung wird somit das Informationssignal über einen gewissen Zeitraum zwischengespeichert und bei Bedarf dem Aufzeichnungsgerät verfügbar gemacht, so daß bei einer momentanen Entscheidung des Benutzers, eine Sendung aufzuzeichnen, das über diesen Zeitraum bereits gesandte Informationssignal noch verfügbar ist. Wenn der Benutzer daher innerhalb dieser Zeitspanne die Entscheidung trifft, eine Sendung aufzuzeichnen, kann diese Sendung vollständig aufgezeichnet werden.

Besonders bevorzugte Ausgestaltungen und Ausbildungen der erfindungsgemäßen Anordnung sind Gegenstand der Patentansprüche 2 bis 11.

Die erfindungsgemäße Anordnung weist einen Informationszwischenspeicher auf, worunter jede Vorrichtung oder Anordnung verstanden wird, die eine Ton- und/oder Bildinformation digital oder analog über einen begrenzten Zeitraum, vorzugsweise 2 bis 10 min., insbesondere 3,5 bis 6,5 min. speichert und diese in der zeitlichen Reihenfolge ihrer Speicherung löschend überspielt und den dadurch frei gewordenen Speicherraum zur übergangslosen Speicherung der nachfolgend eintreffenden Signale zuführt. Beispiele für derartige Speicher sind in einer geschlossenen Schleife geführte Aufzeichnungsbänder oder Aufzeichnungsplatten, ggf. mit zugehörigen Aufnahme-, Lösch- und Wiedergabestationen. Bei einer anderen Form des erfindungsgemäß eingesetzten Speichers werden durch die nachfolgenden Informationen die zuvor gespeicherten Informationen durch den Speicher hindurchgeschoben, so daß bei diesem Ausführungsbeispiel die gespeicherten Informationen durch den Speicher wandern. Ein Beispiel eines derartigen Speichers ist das Schieberegister.

Um den Durchschnittsfachmann auf dem Gebiet der Konstruktion von Ton- und Bildaufzeichnungsgeräten (Videorekorder) einerseits und auf dem Gebiet der Tonaufzeichnungsgeräte (Radiorekorder) andererseits das Verständnis zu erleichtern, sei die Funktionsweise des erfindungsgemäß verwendeten Informationszwischenspeichers bzw. der erfindungsgemäßen Anordnung an folgendem Beispiel beschrieben:

Der Benutzer des Radiorekorders schaltet seinen Radioteil ein. Durch dieses Anschalten wird gleichzeitig der erfindungsgemäße Zwischenspeicher angeschaltet. Im vorliegenden Fall soll er ein Tonband 5-minütiger Laufdauer aufweisen. Dieses Tonband wird in einer geschlossenen Schleife geführt, ggf. in Form eines Möbiusbandes zur Erzielung der gewünschten Kapazität und Verringerung der absoluten Länge des Bandes. Im unmittelbaren Bereich vor den Aufnahmeköpfen befinden sich Löschköpfe; bevorzugt wird ein Aufnahmekopf eingesetzt, der bespieltes Band löschend überspielt, so daß in diesem Fall ein Löschkopf entbehrlich ist.

Durch dem Fachmann geläufige Schaltung wird jeweils die Sendung im Zwischenspeicher aufgezeichnet, die von dem Benutzer des verbundenen Radioempfangsteils gerade eingestellt ist.

Durch den Zwischenspeicher werden im vorliegenden Beispiel immer gerade die letzten vergangenen 5 Minuten gespeichert. Hört nun der Benutzer während der laufenden Sendung beispielsweise ein Lied, von dem er gar nicht wußte oder wissen konnte, daß es in dieser Sendung kommt, das er aber dennoch gerne aufzeichnen möchte, legt er in üblicher Weise seine Aufnahmekasette ein und stellt auf Aufnahme, wodurch unmittelbar nach Beginn dieser Aufnahme der Zwischenspeicher sich abstellt. Auf diese Weise befinden sich beispielsweise die letzten 5 Minuten im Zwischenspeicher, während der nachfolgende Teil der Sendung auf der eingelegten Kasette aufgezeichnet wird.

Die Zeit von 5 Minuten wurde in diesem Beispiel deshalb gewählt, weil dieses erfahrungsgemäß ausreichend Zeit ist, um bei einem nicht bereits zur Aufnahme vorbereitetem Gerät ein Band herauszusuchen und in das Aufzeichnungsgerät einzulegen und die Aufnahme zu starten. Bei üblichen Liedern von etwa 3 Minuten Dauer, würde man zweckmäßigerweise die eingelegte Kasette bei Bedarf erst nach Abschluß des Liedes starten, um sich anschließendes Zusammenschneiden der beiden Liedteile zu ersparen. Hierzu benötigt man bezüglich der häufigen Liedlänge von etwa 3 min. einen Speicher der (zeitlichen) Speicherkapazität von etwa 3,5 min.

Bevorzugt ist die Aufzeichnungsvorrichtung derart ausgebildet, daß bei Einlegen des Bandes automatisch das Band um exakt die Laufdauer vorgeschoben wird, die der Aufnahmekapazität des Zwischenspeichers entspricht, so daß ein unbespielter "Vorspann" gebildet wird. So kann später in einfacherweise der Inhalt des (gestoppten bzw. abgestellten) Zwischenspeichers auf die richtige Stelle, den "Vorspann", des eingelegten Bandes überspielt werden.

Bei der besonders bevorzugten Ausführungsform wird der Inhalt des Zwischenspeichers beim Einschalten der Aufnahme auf das eingelegte Band unmittelbar und, im vorliegenden Fall um 5 Minuten, zeitversetzt, auf das übliche Kasettenband überspielt.

Auf die beschriebene Weise ist es möglich, Aufzeichnungen auf an sich übliche Aufzeichnungsträger (z.B. übliche Aufzeichnungskasetten für Radio- bzw. Videorecorder) aufzubringen, die vor dem Start der üblichen Aufnahme, im vorliegenden Fall in der 5-minütigen Zeitspanne vor dem Start, empfangen wurden. Man erkennt leicht, daß sich schließlich auf dem üblichen Aufzeichnungsträger ein Aufzeichnungsteil befindet, das empfangen wurde, bevor die Aufnahme mit dem üblichen Aufzeichnungsträger gestartet wurde.

Erfindungsgemäß sind im wesentlichen folgende 3 Hauptversionen der erfindungsgemäßen Anordnung von den jeweiligen Durchschnittsfachleuten ohne erfinderisches Zutun konstruktionsmäßig realisierbar:
Version I:
   1. Durch Einschalten des Empfangsgeräts wird der Zwischenspeicher auf der im Empfangsgerät eingestellten Frequenz oder dem eingestellten Kanal eingeschaltet.
   2. Durch Einlegen des Aufnahmeträgers (Band, Platte o. ä.) und Start der Aufnahme und/oder (bei bereits eingelegtem Aufzeichnungsträger) bei Start der Aufnahme wird die Aufzeichnung in den Zwischenspeicher gestoppt, wobei bei Bedarf eine kurze zeitliche Verzögerung derart geschaltet werden kann, daß die Aufnahme in den Zwischenspeicher erst kurz nach dem Beginn der Aufnahme gestoppt wird.
   3. Bei Abschalten der Aufnahme bleibt die Aufnahme in den Zwischenspeicher gestoppt (bei Bedarf kann vorgesehen werden, daß durch einen separaten Befehl der Zwischenspeicher wieder aktiviert wird, wobei dann allerdings, sofern der gespeicherte Inhalt des Zwischenspeichers noch nicht auf den Aufzeichnungsträger überspielt wurde, dieser verloren geht).
   4. Mit einem separaten Befehl wird der Speicherinhalt des gestoppten Zwischenspeichers nachträglich auf den vorgesehenen Aufnahmeträger überspielt und ggfs. mit dem nachfolgenden Sendungsteil, das auf dem üblichen Träger aufgezeichnet ist, "zusammengeschnitten".
   5. Durch Abschaltung des Empfangsgeräts wird die Sperre des Zwischenspeichers aufgehoben.
   6. Durch Einschalten des Empfangsgeräts wird der Zwischenspeicher auf der im Empfangsgerät eingestellten Frequenz oder dem eingestellten Kanal eingeschaltet.
Version II:
   1. Durch Einschalten des Empfangsgeräts wird der Zwischenspeicher auf der im Empfangsgerät eingestellten Frequenz oder dem eingestellten Kanal eingeschaltet.
   2. Der beschriebene "Vorspann" wird entweder dadurch gebildet, daß bei Einlegen des Aufnahmeträgers und/oder bei Start der Aufnahme der Aufnahmeträger um die Kapazität des Zwischenspeichers vorgeschoben wird, wobei der entstandene unbespielte "Vorspann" zeitlich dem Speicherinhalt des Zwischenspeichers entspricht.
      Wird der Vorspann bei Einlegen des Aufnahmeträgers gebildet, entspricht dieser Teil der Version II, dem Schritt 2. der Version I.
      Wird der Vorspann erst durch das Signal "Aufnahme" gebildet, wird die Aufzeichnung auf dem Zwischenspeicher erst nach Beendigung des Bandvorschubs und Beginn der Aufnahme beendet.
   3. Bei Abschalten der Aufnahme bleibt auch die Überspielung auf den Zwischenspeicher gestoppt. (Im übrigen siehe 3., Version I).
   4. Überspielen des Speicherinhalts des gestoppten Zwischenspeichers auf den "Vorspann" des Aufnahmeträgers. Hierzu kann vorgesehen werden, daß bei Abschalten der Überspielung auf den Zwischenspeicher dieser ein Signal speichert, das mit einem entsprechenden Signal auf dem üblichen Aufzeichnungsträger, das auf diesem bei Beginn der Aufnahme erzeugt wird, derart zusammenwirkt, daß der Inhalt vom Zwischenspeicher praktisch "nahtlos" vor die Aufnahme auf den üblichen Aufzeichnungsträger, nämlich auf den "Vorspann", nachträglich übertragen werden kann.
   5. Durch Abschalten des Empfangsgeräts wird die Sperre zur Überspielung auf den Zwischenspeicher aufgehoben.
   6. Durch Einschalten des Empfangsgeräts wird die Überspielung auf den Zwischenspeicher auf der im Empfangsgerät eingestellten Frequenz oder dem eingestellten Kanal begonnen (eingeschaltet).
Version III:
   1. Durch Einschalten des Empfangsgeräts wird der Zwischenspeicher auf der im Empfangsgerät eingestellten Frequenz oder dem eingestellten Kanal eingeschaltet.
   2. Durch Einlegen des Aufnahmeträgers und Start der Aufnahme oder (bei bereits eingelegtem Aufnahmeträger) Start der Aufnahme wird die Überspielung via permanentem Zwischenspeicher, um die Speicherkapazität zeitlich verzögert, auf den Aufnahmeträger ausgelöst. Permanenter Zwischenspeicher bedeutet, daß dieser bei dieser Version nicht abgestellt wird, sondern daß fortlaufend die Überspielung der Sendung auf den Aufnahmeträger durch den permanenten Zwischenspeicher, zeitlich verzögert, erfolgt. Bei dieser Version ist der beschriebene Zwischenspeicher bevorzugt, bei dem die gespeicherten Signale den Speicher durchwandern (z.B. Schieberegister).
   3. Die Abschaltung der Aufzeichnung bewirkt tatsächlich die Abschaltung der Überspielung via permanentem Zwischenspeicher auf den Aufnahmeträger, wobei der Aufnahmeträger stoppt, der Zwischenspeicher jedoch weiterläuft. Der Befehl zur Abschaltung der Aufnahme kann ggf. zeitlich verzögert verarbeitet werden, um die Verzögerung durch das zeitlich versetzte überspielen auf dem Zwischenspeicher auszugleichen und den Inhalt des Zwischenspeichers ab Zeitpunkt des Befehls zur Abschaltung der Aufnahme noch vollständig auf den Aufnahmeträger zu überspielen.
   4. Die nachträgliche Überspielung des Inhalts des Zwischenspeichers auf den eigentlichen Aufzeichnungsträger entfällt.
   5. Durch Abschalten des Empfangsgeräts wird gleichzeitig der Zwischenspeicher abgeschaltet, ggf. mit unter 3. beschriebener Verzögerung.
   6. Durch Einschalten des Empfangsgeräts wird der Zwischenspeicher auf der im Empfangsgerät eingestellten Frequenz oder dem eingestellten Kanal eingeschaltet.

Version I ist die einfachste, Version II eine bevorzugte und Version III die bevorzugteste der hier beispielhaft dargestellten Ausführungsformen der Erfindung.

Bei einer anderen einfachen Ausführungsform der erfindungsgemäßen Vorrichtung kann der Zwischenspeicher eine separate Baueinheit sein, die in die erfindungsgemäße Anordnung aus Empfangsgerät und Aufzeichnungsgerät zu letzterem parallel geschaltet ist. Hierbei weist sie als eigentlichen Zwischenspeicher, wie beschrieben, beispielsweise ein ringförmiges Band, ein Endlosband, eine Speicherplatte oder einen erfindungsgemäß geeigneten anderen Speicher auf, sowie eine Aufnahmestation, eine Wiedergabestation und eine Löschstation, ggfs. auch in Kombination miteinander, auf. Schaltungsmäßig kann sie gemäß den Versionen I bis III mit der an sich bekannten Kombination aus Aufzeichnungs- und Empfangsvorrichtung gekoppelt werden.

Bevorzugt werden jedoch die bei den an sich bekannten Geräten vorhandenen Stationen verwendet. So sind beispielsweise bei Doppelkasettendecks auch die Stationen des für die direkte Aufnahme nicht vorgesehenen Kasettendecks geeignet.

Wenn auch hier bevorzugt die erfindungsgemäße Anordnung anhand eines Radiokasettenrekorders beschrieben wird, gilt die erfindungsgemäße Lehre auch für den Fachmann auf dem Gebiet von Videorekordern, so daß hier nach dem gleichen erfindungsgemäßen Prinzip ermöglicht wird, während einer Fernsehsendung das soeben Gesehene letztlich auf einer üblichen Videokasette gespeichert zu erhalten, obwohl die Kasette zur Aufnahme noch gar nicht eingelegt und/oder gestartet war.

Die erfindungsgemäße Lehre kann vom Durchschnittsfachmann auf verschiedene Weisen gelöst werden: Bei einer bevorzugten Ausführungsform wird der erfindungsgemäße Zwischenspeicher zur Lösung der erfinderischen Aufgabe in das Aufzeichnungsgerät oder in das Empfangsgerät integriert, so daß im Handel beispielsweise ein solcher Radiorekorder, ein solcher Videorekorder, ein solches Fernsehgerät, erhältlich ist.

Es ist aber auch denkbar, den beschriebenen Zwischenspeicher, der Aufgabe und der Lösung gemäß Erfindung angepaßt, als separates Bauteil, sei es als Modul oder als separate Vorrichtung, auszubilden.

## Patentansprüche

1. Empfangs- und Aufzeichnungsanordnung für Rundfunk- bzw. für Fernsehsignale, bestehend aus einem Radio- bzw. Fernsehempfänger, einem Aufzeichnungsgerät und einem Informationszwischenspeicher, dadurch gekennzeichnet,
daß das Einschalten des Empfangsgeräts die Einschaltung des Zwischenspeichers auf die/den im Empfangsgerät eingestellten Frequenz/Kanal bewirkt;
daß der Informationszwischenspeicher eine begrenzte Kapazität aufweist, die einer kurzfristigen Speicherzeit von vorzugsweise nicht mehr als 10 Minuten, insbesondere nicht mehr als 6,5 Minuten entspricht;
daß eine Zugriffs- und Verbindungseinrichtung vorgesehen ist, die in Abhängigkeit von der durch den Benutzer erfolgten Betätigung des Aufzeichnungsgerätes die im Zwischenspeicher gespeicherten Informationssignale dem Aufzeichnungsgerät verfügbar macht; und
daß der Befehl zur Abschaltung des Aufzeichnungsgeräts um den genannten Zeitraum verzögert verarbeitet wird und der Inhalt des Zwischenspeichers ab Zeitpunkt des Befehls zur Abschaltung der Aufnahme noch vollständig auf den Aufnahmeträger überspielt wird.

2. Anordnung nach Anspruch 1, dadurch gekennzeichnet, daß die Zugriffs- und Verbindungseinrichtung nach Betätigung des Aufzeichnungsgeräts die Übertragung der anschließend empfangenen Informationssignale nach einer Zwischenspeicherung im Informationszwischenspeicher auf das Aufzeichnungsgerät bewirkt.

3. Anordnung nach einem der vorhergehenden Ansprüche dadurch gekennzeichnet, daß der Informationszwischenspeicher ein ringförmiger, bandförmiger Informationsträger oder eine Speicherplatte ist.

4. Anordnung nach einem der vorhergehenden Ansprüche dadurch gekennzeichnet, daß der Informatioszwischenspeicher ein die Information durchschiebender Speicher ist.

5. Anordnung nach einem der vorhergehenden Ansprüche, dadurch gekennzeichnet, daß ggf. vorhandene Aufnahme-, Wiedergabe- und Löschstationen mit dem Zwischenspeicher zusammenwirken.

6. Radio- und/oder Fernsehaufzeichnungsgerät mit einem Informationszwischenspeicher für eine Empfangs- und Aufzeichnungsanordnung nach Anspruch 1, dadurch gekennzeichnet, daß der Informationszwischenspeicher eine begrenzte Kapazität aufweist, die einer kurzfristigen Speicherzeit von vorzugsweise nicht mehr als 10 min., insbesondere nicht mehr als 6,5 min. entspricht, eine Zugriffs- und Verbindungseinrichtung vorgesehen ist, die in Abhängigkeit von der durch den Benutzer erfolgten Betätigung des Aufzeichnungsgerätes die im Zwischenspeicher gespeicherten Informationssignale dem Aufzeichnungsgerät verfügbar macht, und der Befehl zur Abschaltung des Aufzeichnungsgerätes um den genannten Zeitraum verzögert verarbeitet wird und der Inhalt des Zwischenspeichers ab Zeitpunkt des Befehls zur Abschaltung der Aufnahme noch vollständig auf den Aufnahmeträger überspielt wird, wobei das Aufzeichnungsgerät vorbereitet ist für ein Zusammenwirken mit einem Radio- und/oder Fernsehgerät, derart daß das Einschalten des Empfangsgeräts die Einschaltung des Zwischenspeichers auf die/den im Empfangsgerät eingestellten Frequenz/Kanal bewirkt.

7. Radio- und/oder Fernsehempfangsgerät mit einem Informationszwischenspeicher für eine Empfangs- und Aufzeichnungsanordnung nach Anspruch 1, dadurch gekennzeichnet, daß das Einschalten des Empfangsgerätes die Einschaltung des Zwischenspeichers auf die/den im Empfangsgerät eingestellten Frequenz/Kanal bewirkt und der Informationszwischenspeicher eine begrenzte Kapazität aufweist, die einer kurzfristigen Speicherzeit von vorzugsweise nicht mehr als 10 min., insbesondere nicht mehr als 6,5 min. entspricht, vorbereitet für ein Zusammenwirken mit einem Aufzeichnungsgerät, welches den Befehl zur Abschaltung des Aufzeichnungsgeräts um den genannten Zeitraum verzögert und wobei der Inhalt des Zwischenspeichers ab Zeitpunkt des Befehls zur Abschaltung der Aufnahme noch vollständig auf den Aufnahmeträger überspielt wird.

## Claims

1. Arrangement for reading and recording radio or television signals, consisting of a radio or television receiver, a recording device and an interim information memory, characterised in that the switching on of the receive device switches on the interim memory to the frequency/channel to which the receiving device is tuned; in that the interim information memory has a limited capacity, which corresponds to a short-term memory time of preferably not more than 10 minutes, in particular of not more than 6.5 minutes; in that an access and connection device is provided, which, in dependency on the user actuating the recording device, makes the information signals stored in the interim memory available to the recording device; and in that the command to switch off the recording device is processed after a delay of the predetermined timespan and the content of the interim memory from the time of the command to switch off the recording is still transferred in its entirety to the recording carrier.

2. Arrangement according to Claim 1, characterised in that the access and connection device transfers, after actuation of the recording device, the information signals which have subsequently been received to an interim memory in the interim information memory on the recording device.

3. Arrangement according to any one of the preceding claims, characterised in that the interim information memory is an annular, tape-shaped information carrier or a memory disc.

4. Arrangement according to any one of the preceding claims, characterised in that the interim information memory is a memory which processes the information serially.

5. Arrangement according to any one of the preceding claims, characterised in that recording, replaying and cancelling stations which may be provided cooperate with the interim memory.

6. Radio and/or television recording device with an interim information memory for a receive and recording arrangement according to Claim 1, characterised in that interim information memory has a limited capacity, which corresponds to a short-term memory time of preferably not more than 10 minutes, in particular of not more than 6.5 minutes, an access and connection device is provided, which, in dependency on the user actuating the recording device, makes the information stored in the interim memory available to the recording device, and the command for switching off the recording device is processed after a delay of the predetermined timespan, and the content of the interim memory is, from the time of the command to switch off the recording, still transferred in its entirety to the recording carrier, wherein the recording device is prepared for cooperation with a radio and/or television set, in a manner such that the switching on of the receive device switches on the interim memory to the frequency/channel to which the receive device is tuned.

7. Radio and/or television receiving device with an interim information memory for a receiving and recording arrangement according to Claim 1, characterised in that the switching on of the receive device switches on the interim memory to the frequency/channel to which the receive device is tuned, and the interim information memory has a limited capacity corresponding to a short-term memory time of approximately no more than 10 minutes, in particular not more than 6.5 minutes, prepared for cooperation with a recording device, which processes the command for switching off the recording device after a predetermined timespan and wherein the content of the interim memory, from the time of the command to switch off the recording, is transferred in its entirety to the recording carrier.

## Revendications

1. Ensemble de réception et d'enregistrement pour des signaux de radio ou de telévision, constitué d'un récepteur radio ou télévision, d'un appareil enregistreur et d'une mémoire temporaire d'informations, caractérisé en ce que
la mise en route de l'appareil récepteur provoque la mise en route de la mémoire temporaire sur la fréquence/le canal réglé(e) dans l'appareil récepteur ;
la mémoire temporaire d'informations présente une capacité limitée qui correspond à une durée de mémorisation à court terme ne dépassant de préférence pas 10 minutes, en particulier ne dépassant pas 6,5 minutes ;
un dispositif d'accès et de liaison est prévu, qui, en fonction de l'actionnement de l'appareil enregistreur par l'utilisateur, met les signaux d'informations stockés dans la mémoire temporaire à la disposition de l'appareil enregistreur ; et
l'ordre de mise à l'arrêt de l'appareil enregistreur est traité avec un retard égal à la durée citée, et le contenu de la mémoire temporaire est encore transféré complètement vers le support enregistreur à partir de l'instant de l'ordre de mise à l'arrêt.

2. Ensemble selon la revendication 1, caractérisé en ce que le dispositif d'accès et de liaison, après l'actionnement de l'appareil enregistreur, provoque la transmission des signaux d'informations reçus ultérieurement, après une mémorisation temporaire dans la mémoire temporaire d'informations, vers l'appareil enregistreur.

3. Ensemble selon l'une quelconque des revendications précédentes, caractérisé en ce que la mémoire temporaire d'informations est un support d'informations annulaire en forme de bande ou un disque de mémorisation.

4. Ensemble selon l'une quelconque des revendications précédentes, caractérisé en ce que la mémoire temporaire d'informations est une mémoire gérant les informations en enfilade.

5. Ensemble selon l'une quelconque des revendications précédentes, caractérisé en ce que les postes d'enregistrement, de restitution et d'effacement éventuellement présents coopèrent avec la mémoire temporaire.

6. Appareil enregistreur radio et/ou de télévision avec une mémoire temporaire d'informations pour un ensemble de réception et d'enregistrement selon la revendication 1, caractérisé en ce que la mémoire temporaire d'informations présente une capacité limitée qui correspond à une durée de mémorisation à court terme ne dépassant de préférence pas 10 minutes, en particulier ne dépassant pas 6,5 minutes, un dispositif d'accès et de liaison est prévu, qui, en fonction de l'actionnement de l'appareil enregistreur par l'utilisateur, met les signaux d'informations stockés dans la mémoire temporaire à la disposition de l'appareil enregistreur, et l'ordre de mise à l'arrêt de l'appareil enregistreur est traité avec un retard égal à la durée citée, et le contenu de la mémoire temporaire est encore transféré complètement vers le support enregistreur à partir de l'instant de l'ordre de mise à l'arrêt, l'appareil enregistreur étant préparé pour une coopération avec un appareil de radio et/ou de télévision de telle manière que la mise en route de l'appareil récepteur provoque la mise en route de la mémoire temporaire sur la fréquence/le canal réglé(e) dans l'appareil récepteur.

7. Appareil enregistreur radio et/ou de télévision avec une mémoire temporaire d'informations pour un ensemble de réception et d'enregistrement selon la revendication 1, caractérisé en ce que la mise en route de l'appareil récepteur provoque la mise en route de la mémoire temporaire sur la fréquence/le canal réglé(e) dans l'appareil récepteur et la mémoire temporaire d'informations présente une capacité limitée qui correspond à une durée de mémorisation à court terme ne dépassant de préférence pas 10 minutes, en particulier ne dépassant pas 6,5 minutes, préparé pour une coopération avec un appareil enregistreur, lequel traite l'ordre de mise à l'arrêt de l'appareil enregistreur avec un retard égal à la durée citée, et le contenu de la mémoire temporaire étant encore transféré complètement vers le support enregistreur à partir de l'instant de l'ordre de mise à l'arrêt.
